# EUROPÄISCHE PATENTSCHRIFT

(11) **EP 2 528 862 B1**
(45) Veröffentlichungstag und Bekanntmachung des Hinweises auf die Patenterteilung: **07.03.2018**
(21) Anmeldenummer: 11701269.0
(22) Anmeldetag: 28.01.2011
(51) Int. Cl.: C01B 25/45, H01M 4/58, H01M 10/052

(54) **SUBSTITUIERTES LITHIUM-MANGAN-METALLPHOSPHAT**
SUBSTITUTED LITHIUM-MANGANESE METAL PHOSPHATE
PHOSPHATE MÉTALLIQUE DE LITHIUM-MANGANÈSE SUBSTITUÉ

(30) Priorität: 28.01.2010 DE 102010006083
(43) Veröffentlichungstag der Anmeldung: 05.12.2012
(73) Patentinhaber: Johnson Matthey PLC, London EC4A 4AB (GB)
(72) Erfinder: NUSPL, Gerhard, 81543 München (DE); TRAN, Nicolas, 85405 Nandlstadt (DE)
(74) Vertreter: Gleave, Robert James
(86) Internationale Anmeldenummer: PCT/EP2011/051189
(87) Internationale Veröffentlichungsnummer: WO 2011/092275

(56) Entgegenhaltungen:
- EP-A1- 1 939 959
- WO-A1-2008/077448
- WO-A1-2010/130684
- DE-A1- 10 117 904
- US-A1- 2005 164 084

## Beschreibung

Die vorliegende Erfindung betrifft ein neues substituiertes Lithium-Mangan-Metallphosphat, ein Verfahren zu dessen Herstellung sowie seine Verwendung als Kathodenmaterial in einer Sekundärlithiumionenbatterie.

Seit den Publikationen von Goodenough et al. (J. Electrochem. Soc., 144, 1188-1194, 1997) fand insbesondere Lithiumeisenphosphat großes Interesse zur Verwendung als Kathodenmaterial in wiederaufladbaren Sekundärlithiumionenbatterien. Lithiumeisenphosphat bietet gegenüber herkömmlichen auf Spinellen oder Schichtoxiden basierten Lithiumverbindungen, wie Lithiummanganoxid, Lithiumkobaltoxid und Lithiumnickeloxid höhere Sicherheitseigenschaften im delithiiertem Zustand wie sie insbesondere für den zukünftigen Einsatz von Batterien bei Elektroautos, elektrisch betriebenen Werkzeugen etc. in der Zukunft nötig sind.

Das reine Lithiumeisenphosphatmaterial wurde durch das sogenannte "carbon coating" (Ravet et al., Meeting of Electrochemical Society, Honolulu, 17. - 31. Oktober 1999, EP 1 084 182 B1) verbessert, da eine erhöhte reversible Kapazität des mit Kohlenstoff beschichteten Materials bei Raumtemperatur erhalten wird (160 mAH/g).

Neben den üblichen Festkörpersynthesen (US 5,910,382 C1 bzw. die US 6,514,640 C1) wurde in der WO 2005/051840 eine Hydrothermalsynthese für Lithiumeisenphosphat mit der Möglichkeit der Kontrolle der Größe und Morphologie der Lithiumeisenphosphatteilchen offenbart.

Nachteilig an Lithiumeisenphosphat ist insbesondere dessen Redoxpaar Fe³⁺/Fe²⁺, das gegenüber Li/Li⁺ ein bedeutend niedriges Redoxpotential (3,45 V gegen Li/Li⁺) als beispielsweise das Redoxpaar Co³⁺/Co⁴⁺ in LiCoO₂ aufweist (3,9 V gegen Li/Li⁺) .

Insbesondere Lithiummanganphosphat LiMnPO₄ ist in Anbetracht seines höheren Mn²⁺/Mn³⁺ Redoxpaars (4,1 Volt) gegen Li/Li⁺ von Interesse. LiMnPO₄ wurde auch schon von Goodenough et al., US 5,910,382 offenbart.

Die Herstellung von elektrochemisch aktiven und insbesondere kohlenstoffbeschichteten LiMnPO₄ hat sich jedoch als sehr schwierig herausgestellt.

EP 1 939 959 A1 betrifft ein aktives, positives Elektrodenmaterial der allgemeinen Formel LiMn₁₋ₓMₓPO₄ mit 0 ≤ x < 1 und M ausgewählt aus der Gruppe bestehend aus Co, Ni, Fe, Zn, Cu, Ti, Sn, Zr, V und Al, das in nicht-wässrigen Elektrolytbatterien eingesetzt werden kann. Die Herstellung des Elektrodenmaterials umfasst das Vermischen einer Kohlenstoff-Quelle mit Lithium-Mangan-Phosphat LiMnPO₄ oder einer Verbindung LiMn₁₋ₓMₓPO₄ und Erhitzen der Mischung unter Inertgasatmosphäre.

Die elektrischen Eigenschaften von Lithiummanganphosphat wurden durch Eisensubstitution der Manganstellen verbessert:
WO 2008/077448 A1 offenbart ein positives Elektrodenmaterial der allgemeinen Formel LiFe₁₋ₓMₓPO₄, wobei M Co und/oder Mn ist und sich der Dotierungsgehalt für M zwischen 0 < x < 1 und 0,4 < x < 0,95 bewegen kann. Bei der Herstellung der Verbindungen gemäß der WO 2008/077448 A1 wird eine wässrigen Mischung mit einem pH-Wert zwischen 6 und 10 enthaltend ein dipolares, aprotisches Additiv sowie die entsprechenden Vorläuferverbindungen unter Normaldruck erhitzt.

Die DE 101 17 904 A1 offenbart binäre, ternäre und quaternäre Lithiumeisenphosphate der allgemeinen Formel Li(FeₓM¹_{y}M²_{z})PO₄, wobei M¹ und M² mindestens ein Element der Sc, Ti, V, Cr, Mn, Co, Ni, Cu, Zn, Be, Mg, Ca, Sr, Ba, Al, Zr und La umfassenden Gruppe sein kann, und x = 0,5, y = 0-0,5, z = 0-0,5 ist, mit der Maßgabe, dass x + y + z = 1 ist oder X = 0, y = 1, z = 0 bedeutet, falls M¹ ausgewählt ist aus der Gruppe aus Sc, Ti, V, Cr, Mn, Co, Ni, Cu und Zn. Die Herstellung der Lithiumeisenphosphate erfolgt durch Kopräzipitation der entsprechenden Vorläuferverbindungen und Trocknen des Fällungsprodukts unter Inertgasatmosphäre bei Raumtemperatur bis 200°C, sowie Tempern im Temperaturbereich von 200°C bis 800°C.

Herle et al. in Nature Materials, Vol. 3, S. 147-151 (2004) beschreiben mit Zirkonium dotierte Lithium-Eisen und Lithium-Nickelphosphate. Morgan et al. beschreibt in Electrochem. Solid State Lett. 7 (2), A30-A32 (2004) die intrinsische Lithiumionenleitfähigkeit in LiₓMPO₄ (M = Mn, Fe, Co, Ni) Olivinen. Yamada et al. beschäftigen sich in Chem. Mater. 18, S. 804-813, 2004 mit den elektrochemischen, magnetischen und strukturellen Besonderheiten von Liₓ(Mn_{y}Fe_{1-y})PO₄, die z.B. auch in der WO2009/009758 offenbart sind. Strukturelle Variationen von Liₓ(Mn_{y}Fe_{1-y})PO₄, d.h. der Lithiophilit-Triphylit Serie wurden von Losey et al. The Canadian Mineralogist, Vol. 42, S. 1105-1115 (2004) beschrieben. Die praktischen Auswirkungen der letzteren Untersuchungen bezüglich des Diffusionsmechanismus der Deinterkalation in Liₓ(Mn_{y}Fe_{1-y})PO₄ Kathodenmaterial finden sich bei Molenda et al. Solid State Ionics 177, 2617-2624 (2006).

Jedoch tritt eine plateauähnliche Region bei den Entladekurven bei 3,5 Volt gegenüber Lithium (Eisenplateau) auf, dessen Länge sich verglichen mit reinem LiMnPO₄ mit zunehmenden Eisengehalt vergrößert, was in einem Verlust an Energiedichte resultiert (siehe Yamada et al. in der vorstehend erwähnten Veröffentlichung). Die langsame Kinetik (Ladungs- und Entladungskinetiken) insbesondere von Liₓ(Mn_{y}Fe_{1-y})PO₄ mit y > 0.8 machen bislang die Verwendung von diesen Verbindungen für Batterieanwendungen weitgehend unmöglich.

Die Aufgabe der vorliegenden Erfindung bestand daher darin, geeignete Lithium-Mangan-Phosphat-Derivate zur Verfügung zu stellen, die eine hohe Energiedichte beim Einsatz als Kathodenmaterial ermöglichen und ein hohes Redoxpotential mit einer schnellen Kinetik im Hinblick auf Ladungs- und Entladungsprozesse zur Verfügung stellen.

Diese Aufgabe wird gelöst durch ein substituiertes Lithium-Mangan-Metallphosphat der Formel

LiFeₓMn_{1-x-y}M_{y}PO₄

bei dem M ein zweiwertiges Metall aus der Gruppe Zn, Ca und Cd ist und wobei gilt: x < 1, 0,07 < y ≤ 0,20 und x + y < 1; oder bei dem M Mg ist und wobei gilt: 0,01 ≤ x ≤ 0,11, 0,075 < y ≤ 0,15 und x + y < 0,2.

Besonders bevorzugt ist als zweiwertiges Metall M Zn oder Ca oder deren Kombinationen, insbesondere Zn. Überraschenderweise hat sich im Rahmen der vorliegenden Erfindung gezeigt, dass diese elektrisch inaktiven Substitutionselemente die Bereitstellung von Materialien mit besonders hoher Energiedichte ermöglichen, wenn sie als Elektrodenmaterialien eingesetzt werden.

Es wurde gefunden, dass bei dem substituierten Lithium-Metallphosphat der vorliegenden Erfindung LiFeₓMn_{1-x-y}M_{y}PO₄ der Wert für y im Bereich von mehr als 0,07 bis 0,20 liegt und bevorzugt 0,1 ist.

Die Substitution (oder Dotierung) durch die an sich elektrochemisch inaktiven zweiwertigen Metallkationen scheint bei Werten von x = 0,1 und y = 0,1 - 0,15, bevorzugt 0,1 - 0,13, insbesondere 0,11 ± 0,1 die allerbesten Ergebnisse im Hinblick auf Energiedichte des erfindungsgemäßen Materials zu liefern. Für die Dotierung mit Magnesium (LiFeₓMn_{1-x-y}Mg_{y}PO₄) wurden gegenüber Zn und Ca leicht abweichende Werte gefunden. Hier gilt, dass 0,01 ≤ x ≤ 0,11 und 0,07 < y < 0,20, bevorzugt 0,075 ≤ y ≤ 0,15 ist und x + y < 0,2 sein muss. D.h. dass ein hoher Mangangehalt mit einem relativ niedrigen Eisengehalt und einem relativ hohen Magnesiumgehalt die besten Ergebnisse hinsichtlich Energiedichte liefern, was im Hinblick auf den elektrisch inaktiven Charakter des Magnesiums besonders überraschend ist. Es wurde gefunden, dass für erfindungsgemäßen Verbindungen wie LiMn_{0,80}Fe_{0,10}Mg_{0,10}PO₄, LiMn_{0,80}Fe_{0,10}Zn_{0,10}PO_{y} und LiMn_{0,80}Fe_{0,10}Ca_{0,10}PO₄eine Entladekapazität bei C/10 größer als 140 mAh/g, wenn die Synthesetemperatur kleiner als 650°C war.

In weiteren bevorzugten Ausführungsformen der vorliegenden Erfindung beträgt der Wert für x in dem erfindungsgemäßen gemischten Lithium-Metallphosphat der allgemeinen Formel LiFeₓMn_{1-x-y}M_{y}PO₄ 0,01 - 0, 4, besonders bevorzugt 0, 5 - 0,2, ganz besonders bevorzugt 0,15 ± 0,3. Dieser Wert, insbesondere in Verbindung mit dem vorstehend genannten besonders bevorzugten Wert für y ergibt den am meisten bevorzugten Kompromiss zwischen Energiedichte und Strombelastbarkeit des erfindungsgemäßen Materials. Dies bedeutet, dass die Verbindung LiFeₓMn_{1-x-y}M_{y}PO₄ für M = Zn oder Ca mit x = 0,33 und y = 0,10 eine vergleichbare Strombelastbarkeit bis 20C bei der Entladung aufweist wie die von LiFePO₄ des Standes der Technik (z.B. von der Firma Süd-Chemie erhältlich), aber zusätzlich auch einen Gewinn in Energiedichte (ca. 20 % gegenüber LiFePO₄ (gemessen gegen eine Lithium-Titanat (Li₄Ti₅O₁₂) Anode).

In weiteren bevorzugten Ausführungsformen der vorliegenden Erfindung umfasst das substituierte Lithium-Mangan-Metallphosphat zusätzlich Kohlenstoff. Der Kohlenstoff ist dabei besonders bevorzugt im gesamten substituierten Lithium-Mangan-Metallphosphat gleichmäßig verteilt. In anderen Worten, der Kohlenstoff bildet eine Art Matrix, in dem das erfindungsgemäße Lithium-Mangan-Metallphosphat eingelagert ist. Dabei spielt es für den vorliegend verwendeten Begriff "Matrix" in seiner Bedeutung keine Rolle, ob z.B. die Kohlenstoffpartikel als "Nukleierungsstellen" für das erfindungsgemäße LiFeₓMn_{1-x-y}M_{y}PO₄ dienen, d.h. also dass diese auf dem Kohlenstoff abgelagert sind, oder ob, wie in einer besonders bevorzugten Weiterbildung der vorliegenden Erfindung die einzelnen Partikel des Lithium-Mangan-Metallphosphats LiFeₓMn_{1-x-y}M_{y}PO₄ von Kohlenstoff bedeckt, also umhüllt oder anders gesagt beschichtet sind. Beide Varianten werden erfindungsgemäß gleichwertig verstanden und fallen unter die vorstehende Definition.

Wichtig ist für die Zwecke der vorliegenden Erfindung nur, dass der Kohlenstoff im erfindungsgemäßen substituierten Lithium-Mangan-Metallphosphat LiFeₓMn_{1-x-y}M_{y}PO₄ gleichmäßig verteilt ist und eine Art (dreidimensionale) Matrix bildet. Das Vorhandensein von Kohlenstoff bzw. einer Kohlenstoffmatrix kann in vorteilhaften Weiterbildungen der vorliegenden Erfindung die weitere Zugabe von elektrisch leitfähigen Zusatzstoffen beim Einsatz des erfindungsgemäßen LiFeₓMn_{1-x-y}M_{y}PO₄ als Elektrodenmaterial obsolet machen.

Der Anteil an Kohlenstoff bezogen auf das substituierte Lithium-Mangan-Metallphosphat beträgt ≤ 4 Gew.-%, in anderen Ausführungsformen weniger als 2,5 Gew%, noch in anderen weniger als 2,2 Gew.-% und in noch weiteren Ausführungsformen weniger als 2,0 Gew.-%. Dabei werden erfindungsgemäß die besten Energiedichten des erfindungsgemäßen Materials erreicht.

Das erfindungsgemäße substituierte Lithium-Mangan-Metallphosphat LiFeₓMn_{1-x-y}M_{y}PO₄ ist bevorzugt in einer Kathode für eine Sekundärlithiumionenbatterie als Aktivmaterial enthalten. Dabei kann diese Kathode das erfindungsgemäße LiFeₓMn_{1-x-y}M_{y}PO₄ auch ohne weiteren Zusatz eines weiteren leitfähigen Materials wie z.B. Leitruß, Acetylenschwarz, Ketjen-schwarz, Graphit usw. enthalten (in anderen Worten leitmittelzusatzfrei sein), und zwar sowohl bei dem erfindungsgemäßen kohlenstoffhaltigen LiFeₓMn_{1-x-y}M_{y}PO₄ wie bei dem kohlenstofffreien LiFeₓMn_{1-x-y}M_{y}PO₄.

In weiteren bevorzugten Ausführungsformen enthält die erfindungsgemäße Kathode eine weitere Lithium-Metall-Sauerstoff-Verbindung. Dieser Zusatz erhöht die Energiedichte je nach Menge um bis zu ca. 10 - 15 %, je nach Art der weiteren gemischten Lithium-Metallverbindung verglichen mit Kathoden, die nur das erfindungsgemäße LiFeₓMn_{1-x-y}M_{y}PO₄ als alleiniges Aktivmaterial enthalten.

Die weitere Lithium-Metall-Sauerstoff-Verbindung ist bevorzugt ausgewählt aus substituiertem oder nicht substituiertem LiCoO₂, LiMn₂O₄, Li(Ni,Mn,Co)O₂, Li(Ni,Co,Al)O₂ und LiNiO₂, sowie LiMnFePO₄ und Li(Fe,Mn)PO₄ und Mischungen davon.

Die Aufgabe wird weiter gelöst durch ein Verfahren zur Herstellung eines erfindungsgemäßen gemischten Lithium-Mangan-Metallphosphats bzw. eines Lithium-Mangan-Metallphosphats der Formel LiFeₓMn_{1-x-y}M_{y}PO₄, bei dem M Mg ist und wobei gilt: 0,01 ≤ x ≤ 0,11, 0,07 < y ≤ 0,20 und x + y < 0,2, umfassend die folgenden Schritte:
a. des Herstellen einer Mischung, enthaltend eine Li-Ausgangsverbindung, eine Mn- Ausgangsverbindung, eine Fe-Ausgangsverbindung, eine M²⁺ Ausgangsverbindung und eine PO₄³⁻ Ausgangsverbindung,
b. des Erhitzens der Mischung bei einer Temperatur von 450-850°
c. des Isolierens von LiFeₓMn_{1-x-y}M_{y}PO₄, wobei x und y die vorstehend genannten Bedeutungen aufweisen.

Das erfindungsgemäße Verfahren ermöglicht insbesondere die Herstellung von phasenreinem LiFeₓMn_{1-x-y}M_{y}PO₄, das frei von mittels XRD zu ermittelnden Verunreinigungen ist.

Nach dem Erhitzen (Sintern) wird das erfindungsgemäß erhaltene LiFeₓMn_{1-x-y}M_{y}PO₄ isoliert und in bevorzugten Weiterbildungen der Erfindung deagglomeriert, z.B. durch Mahlen mit einer Luftstrahlmühle.

In Weiterbildungen des erfindungsgemäßen Verfahrens wird in Schritt a) oder nach Schritt c) ein kohlenstoffhaltiges Material zugegeben. Dies kann entweder reiner Kohlenstoff sein, wie z.B. Graphit, Acetylen Ruß oder Ketjen Schwarz, oder aber eine kohlenstoffhaltige Vorläuferverbindung, die sich anschließend unter thermischer Einwirkung zu Kohlenstoff zersetzt, z.B. Stärke, Gelatine, ein Polyol, Cellulose, ein Zucker wie Mannose, Fructose, Sucrose, Laktose, Galactose, ein z.T. wasserlösliches Polymer wie z.B. ein Polyacrylat usw.

Alternativ kann auch das nach der Synthese erhaltene LiFeₓMn_{1-x-y}M_{y}PO₄ mit einer wie vorstehend definierten kohlenstoffhaltigen Material vermischt oder mit einer wässrigen Lösung desselben imprägniert werden. Dies kann sowohl direkt nach der Isolierung des LiFeₓMn_{1-x-y}M_{y}PO₄ oder nach seiner Trocknung oder Deagglomerierung geschehen.

Anschließend wird z.B. die Mischung aus LiFeₓMn_{1-x-y}M_{y}PO₄ und Kohlenstoff-Vorläuferverbindung (das z.B. während dem Verfahren zugegeben wurde) bzw. das mit der Kohlenstoff-Vorläuferverbindung imprägnierte LiFeₓMn_{1-x-y}M_{y}PO₄ getrocknet und auf eine Temperatur zwischen 500 °C und 850 °C erhitzt, wobei die Kohlenstoff-Vorläuferverbindung zu reinem Kohlenstoff pyrolysiert wird, der dann die LiFeₓMn_{1-x-y}M_{y}PO₄ Partikel ganz oder zumindest teilweise als Schicht bedeckt.

Nach der Pyrolyse schließt sich üblicherweise eine Mahl- oder Deagglomerationsbehandlung an.

Die Pyrolyse des erfindungsgemäß erhaltenen LiFeₓMn_{1-x-y}M_{y}PO₄ findet vorzugsweise unter Schutzgas, bevorzugt Stickstoff, an Luft oder im Vakuum statt.

Bevorzugt werden im Rahmen des erfindungsgemäßen Verfahrens die Li⁺-Quelle, die Eisenquelle, d.h. entweder eine Fe²⁺- oder Fe³⁺ und Mn²⁺-Quelle sowie die M²⁺-Quelle in Form von Feststoffen eingesetzt und auch die PO₄³⁻-Quelle in Form eines

Feststoffs, d.h. eines Phosphats, Hydrogenphosphats oder Dihydrogenphosphats oder P₂O₅

Als Lithiumquelle wird erfindungsgemäß Li₂O LiOH oder Li₂CO₃, Lithiumoxalat oder Lithiumacetat, bevorzugt LiOH oder Li₂CO₃ verwendet.

Die Fe-Quelle ist bevorzugt eine Fe²⁺-Verbindung, insbesondere FeSO₄, FeCl₂, Fe(NO₃)₂, Fe₃(PO₄)₂ oder ein Fe-Organylsalz, wie Eisenoxalat oder Eisenacetat. In anderen Ausführungsformen der Erfindung ist die Eisenquelle eine Fe³⁺-Verbindung, insbesondere ausgewählt aus FePO₄, Fe₂O₃ oder eine Verbindung mit gemischten Oxidationstufen bzw. Verbindungen wie Fe₃O₄. Wird ein dreiwertiges Eisensalz verwendet, muss allerdings in Schritt a) des erfindungsgemäßen Verfahren eine wie vorstehend kohlenstoffhaltige Verbindung zugegeben werden, bzw. Kohlenstoff in Form von Graphit, Ruß, Ketjenschwarz, Acetylenschwarz etc. Diese reduziert während des erfindungsgemäßen Verfahrens das dreiwertige Eisen zu zweiwertigem Eisen (sog. carbothermische Reduktion). Das Endprodukt enthält nach Durchführung des Verfahrens dann entweder noch Kohlenstoff (typischerweise gleichmäßig im Produkt verteilt), falls Kohlenstoff im Überschuss zugesetzt wurde, oder, bei stöchiometrischem Einsatz keinen Kohlenstoff mehr. In einer weiteren Variante ist auch anschließend eine weitere Kohlenstoffbeschichtung wie oben erklärt möglich.

Als Manganquelle kommen alle geeigneten zweiwertigen oder dreiwertigen Manganverbindungen, wie Oxide, Hydroxide, Carbonate, Oxalate, Acetate usw. in Frage wie MnSO₄, MnCl₂, MnCO₃, MnO, MnHPO₄, Manganoxalat, Manganacetat oder ein Mn³⁺-Salz, ausgewählt aus MnPO₄, Mn₂O₃ oder eine Manganverbindung mit gemischten Oxidationsstufen wie Mn₃O₄. Im Falle der Verwendung einer dreiwertigen Manganverbindung muss wie beim Eisen vorstehend ausgeführt, ein kohlenstoffhaltiges Reduktionsmittel in der Mischung in Schritt a) in stöchiometrischer oder überstöchiometrischer Menge bezogen auf das dreiwertige Mangan vorliegen.

Als Verfahrensvarianten ist es erfindungsgemäß möglich, dass entweder nur zweiwertige Mangan- und Eisenverbindungen eingesetzt werden, oder eine dreiwertige Eisenverbindung und eine zweiwertige Manganverbindung, weiter eine zweiwertige Eisenverbindung und eine dreiwertige Manganverbindung, oder aber auch je eine dreiwertige Eisen- und Manganverbindung. Im Falle der Verwendung mindestens einer dreiwertigen Eisen bzw. Manganverbindung muss selbstverständlich eine dazu zumindest stöchiometrische Menge oder überstöchiometrische an Kohlenstoff (bzw. eine entsprechende Menge einer kohlenstoffhaltigen Verbindung) in der Mischung in Schritt a) des erfindungsgemäßen Verfahrens enthalten sein.

Als PO₄³⁻-Quelle wird erfindungsgemäß bevorzugt ein Metallphosphat, Hydrogenphosphat oder Dihydrogenphosphat verwendet, wie z.B. LiH₂PO₄, LiPO₃, FePO₄, MnPO₄, das heißt die entsprechenden Eisen und Manganverbindungen bzw. die entsprechenden Verbindungen der wie oben definierten zweiwertigen Metalle. Auch P₂O₅ ist erfindungsgemäß einsetzbar.

Als Quelle für das zweiwertige Metallkation kommen wie schon gesagt insbesondere die entsprechenden Phosphate, Carbonate, Oxide, Sulfate, insbesondere von Mg, Zn und Ca in Frage, oder die entsprechenden Acetate, Carboxylate (wie Oxalate und Acetate).

Die Erfindung ist nachstehend anhand von Beispielen und Abbildungen näher erläutert, ohne dass diese als einschränkend verstanden werden sollen.

Es zeigen:
- Figur 1: ein XRD-Diagramm von erfindungsgemäßen LiMn_{0,80}Fe_{0,10}Zn_{0,10}PO₄;
- Figur 2: Entladungskurven bei C/10 und bei 1C für ein Lithium-Mangan-Eisenphosphat LiMn_{0,80}Fe_{0,20}PO₄ des Standes der Technik;
- Figur 3: Entladungskurven bei C/10 und bei 1C für erfindungsgemäßes LiMn_{0,80}Fe_{0,10}Mg_{0,10}PO₄;
- Figur 4: Entladungskurven bei C/10 und bei 1C für das erfindungsgemäße LiMn_{0,56}Fe_{0,33}Zn_{0,1}PO₄;
- Figur 5: Spannungsprofile bei 1C nach Alterung von erfindungsgemäßen LiMn_{0,56}Fe_{0,33}Mg_{0,10}PO₄ Material gegenüber Lithium-Mangan-Eisenphosphat (LiMn_{0,66}Fe_{0,33}PO₄) des Standes der Technik.

### Ausführungsbeispiele

### 1. Bestimmung der Teilchengrößenverteilung:

Die Teilchengrößenverteilungen für die Mischungen bzw. Suspensionen und des hergestellten Materials wird anhand der Lichtstreuungsmethode unter Verwendung handelsüblicher Vorrichtungen bestimmt. Diese Methode ist dem Fachmann an sich bekannt, wobei auch insbesondere auf die Offenbarung in der JP 2002-151082 und der WO 02/083555 verwiesen wird. Vorliegend wurden die Teilchengrößenverteilungen mit Hilfe eines Laserbeugungsmessgerätes (Mastersizer S, Firma Malvern Instruments GmbH, Herrenberg, DE) und der Software des Herstellers (Version 2.19) mit einem Malvern Small Volume Sample Dispersion Unit, DIF 2002 als Messeinheit bestimmt. Es wurden folgende Messbedingungen gewählt: Compressed range; active beam length 2,4 mm; Messbereich: 300 RF; 0,05 bis 900 µm. Die Probenvorbereitung und -messung erfolgte nach den Herstellerangaben.

Der D₉₀-Wert gibt den Wert an, bei dem 90 % der Teilchen in der gemessenen Probe einen kleineren oder gleichen Teilchendurchmesser aufweisen. Entsprechend geben der D₅₀-Wert bzw. der D₁₀-Wert den Wert an, bei dem 50 % bzw. 10 % der Teilchen in der gemessenen Probe einen kleineren oder gleichen Teilchendurchmesser aufweisen.

Nach einer besonders bevorzugten erfindungsgemäßen Ausführungsform gelten die in der vorliegenden Beschreibung genannten Werte für die D₁₀-Werte, D₅₀-Werte, die D₉₀-Werte sowie die Differenz der D₉₀- und der D₁₀-Werte bezogen auf den Volumenanteil der jeweiligen Teilchen am Gesamtvolumen. Danach geben die hier genannten D₁₀-, D₅₀- und D₉₀-Werte nach dieser erfindungsgemäßen Ausführungsform diejenigen Werte an, bei dem 10 Volumen-% bzw. 50 Volumen-% bzw. 90 Volumen-% der Teilchen in der gemessenen Probe einen kleineren oder gleichen Teilchendurchmesser aufweisen. Bei der Einhaltung dieser Werte werden erfindungsgemäß besonders vorteilhafte Materialien bereitgestellt und negative Einflüsse von relativ groben Teilchen (mit verhältnismäßig größerem Volumenanteil) auf die Verarbeitbarkeit und die elektrochemischen Produkteigenschaften vermieden. Besonders bevorzugt gelten die in der vorliegenden Beschreibung genannten Werte für die D₁₀-Werte, die D₅₀-Werte, die D₉₀-Werte sowie die Differenz der D₉₀- und der D₁₀-Werte sowohl bezogen auf Prozent als auch Volumenprozent der Teilchen.

Bei Zusammensetzungen (z.B. Elektrodenmaterialien), die neben den erfindungsgemäßen mit zweiwertigen Metallkationen substituierte Lithium-Mangan-Eisenphosphate weitere Komponenten enthalten, insbesondere bei kohlehaltigen Zusammensetzungen, kann die vorstehende Lichtstreuungsmethode zu irreführenden Ergebnissen führen, da die LiFeₓMn_{1-x-y}M_{y}PO₄-Teilchen (Partikel) durch das zusätzliche (z.B. kohlehaltige) Material zu größeren Agglomeraten verbunden sein können. Die Teilchengrößenverteilung des erfindungsgemäßen Materials bei solchen Zusammensetzungen kann jedoch anhand von REM-Aufnahmen wie folgt bestimmt werden:

Eine kleine Menge der Pulverprobe wird in Aceton suspendiert und für 10 Minuten mit Ultraschall dispergiert. Sofort danach werden einige Tropfen der Suspension auf einen Probenteller eines Rasterelektronenmikroskops (REM) getropft. Die Feststoffkonzentration der Suspension und die Anzahl der Tropfen werden so bemessen, dass sich eine weitgehend einlagige Schicht aus Pulverpartikeln (der Ausdruck "Partikel" wird auch synonym zu "Teilchen" verwendet) auf dem Träger ausbildet, um ein gegenseitiges Verdecken der Pulverpartikel zu verhindern. Das Auftropfen muss rasch erfolgen, bevor sich die Partikel durch Sedimentation nach der Größe trennen können. Nach Trocknen an Luft wird die Probe in die Messkammer des REM überführt. Im vorliegenden Beispiel handelt es sich um ein Gerät des Typs LEO 1530, das mit einer Feldemissionselektrode bei 1,5 kV Anregungsspannung und einem Probenabstand von 4 mm betrieben wird. Von der Probe werden mindestens 20 zufällig gelegte Ausschnittsvergrößerungen mit einem Vergrößerungsfaktor von 20.000 aufgenommen. Diese werden jeweils auf einem DIN A4-Blatt mitsamt dem eingeblendeten Vergrößerungsmaßstab ausgedruckt. Auf jedem der mindestens 20 Blätter werden nach Möglichkeit mindestens 10 freie sichtbare Partikel des erfindungsgemäßen Materials, aus denen die Pulverpartikel zusammen mit dem kohlenstoffhaltigen Material aufgebaut sind zufällig ausgewählt, wobei die Umgrenzung der Partikel des erfindungsgemäßen Materials durch das Fehlen fester, direkter Verwachsungsbrücken definiert sind. Verbrückungen durch Kohlenstoffmaterial hingegen werden zur Partikelgrenze gezählt. Von jedem dieser ausgewählten Partikel wird jeweils die in der Projektion längste und kürzeste Achse mit einem Lineal abgemessen und anhand des Maßstabsverhältnisses auf die realen Partikelabmessungen umgerechnet. Für jedes ausgemessene LiFeₓMn_{1-x-y}M_{y}PO₄-Partikel wird der arithmetische Mittelwert aus der längsten und der kürzesten Achse als Partikeldurchmesser definiert. Anschließend teilt man die ausgemessenen LiFeₓMn_{1-x-y}M_{y}PO₄ - Partikel in Analogie zur Lichtstreuungsmessung in Größenklassen ein. Trägt man die Anzahl der jeweils zugehörigen Partikel über der Größenklasse auf, erhält man differentielle Partikelgrößenverteilung bezogen auf die Partikelanzahl. Werden die Partikelzahlen fortlaufend den kleinen zu den großen Partikelklassen hin aufsummiert, erhält man die kumulierte Partikelgrößenverteilung, aus der D₁₀, D₅₀ und D₉₀ auf der Größenachse direkt abgelesen werden können.

Das beschriebene Verfahren findet auch Anwendung auf das erfindungsgemäße Material enthaltende Batterieelektroden. In diesem Fall wird jedoch statt einer Pulverprobe eine frische Schnitt- oder Bruchfläche der Elektrode auf den Probenträger befestigt und in REM untersucht.

### Beispiel 1: Herstellung von LiMn_{0,56}Fe_{0,33}Mg_{0,1}PO₄ nach dem erfindungsgemäßen Verfahren

92,9 g Li₂CO₃ wurden mit 47, 02 g FePO₄ . H₂O, 54, 02 g MnCO₃ und 4,92 g Mg(OH)₂ und 5 Gew. % Zelluloseacetat (bezogen auf der Gesamtmasse der anderen Reagenzien) wurden in Isopropanol nassvermahlen (Retsch PM400, 500mL Becher, 100*10 mm Kugel, 380 U/min). Das Lösungsmittel wurde verdampft und die trockene Mischung wurde anschließend in einem Schutzgaskammerofen (Linn KS 80-S) bei 750 °C für 11 h gesintert. Das so erhaltene Produkt wurde anschließend mit einer Rotor-Schnellmühle (Pulverisette 14, Fritsche, 80 µm Sieb) vermahlen.

### Beispiel 2: Darstellung von LiMn_{0,56}Fe_{0,33}Zn_{0,10}PO₄

Die Synthese wurde wie in Beispiel 1 durchgeführt, nur wurde anstelle von Mg(OH)₂ 8,38 g Zn(OH)₂ als Ausgangsmaterial in den entsprechenden molaren Gewichtsmengen verwendet.

### Beispiel 3: Herstellung von LiMn_{0,80}Fe_{0,10}Mg_{0,10}PO₄ nach dem erfindungsgemäßen Verfahren

Die Synthese wurde wie in Beispiel 1 durchgeführt, nur wurden 77,17 g MnCO₃, 14,25 g FePO₄.H₂O, 4,92 g Mg(OH)₂ als Ausgangsmaterialien in den entsprechenden molaren Gewichtsmengen verwendet.

### Beispiel 4: Herstellung von LiMn_{0,}₅₆Fe_{0,}₃₃Mg_{0,}₁₀PO₄ nach dem erfindungsgemäßen Verfahren (carbothermische Variante)

Die Synthese wurde wie in Beispiel 1 durchgeführt, nur wurden anstelle von FePO₄ x 7 H₂O die entsprechenden molaren Mengen Fe₂O₃ und Graphit verwendet.

### Beispiel 5: Herstellung von LiMn_{0,}₈₀Fe_{0,10}Mg_{0,1}PO₄ nach dem erfindungsgemäßen Verfahren (carbothermische Variante)

Die Synthese wurde wie in Beispiel 1 und 5 durchgeführt, nur wurden anstelle von FePO₄ H₂O die entsprechenden molaren Menge Fe₂O₃ sowie die doppelt stöchiometrische Menge Graphit verwendet. Das erhaltene kohlenstoffhaltige LiMn_{0,80}Fe_{0,10}Mg_{0,10}PO₄ Verbundmaterial enthielt den Kohlenstoff gleichmäßig im gesamten Material verteilt.

### Beispiel 6 Kohlenstoffbeschichtung des erhaltenen Materials (Variante 1)

Die in dem Beispiel 1 bis 3 erhaltenen Materialien wurden mit einer Lösung von 24 g Laktose in Wasser imprägniert und anschließend bei 750°C für 3 Stunden unter Stickstoff kalziniert.

Je nach Menge der Laktose lag der Kohlenstoffanteil des erfindungsgemäßen Produkts zwischen 0,2 bis 4 Gew.-%.

Typischerweise wurde 1 kg trockenes Produkt aus den Beispielen 1 und 2 mit 112 g Laktosemonohydrat und 330 g deionisiertem Wasser innig vermengt und über Nacht im Vakuumtrockenschrank bei 105°C und < 100 mbar auf eine Restfeuchte von 3 % getrocknet. Das sprödharte Trocknungsprodukt wurde von Hand gebrochen und in einer Scheibenmühle (Fritsch Pulverisette 13) mit einem 1 mm Scheibenabstand grob gemahlen und in Edelstahltiegeln in einen Schutzgaskammerofen (Linn KS 80-S) überführt. Dieser wurde bei einem Stickstoffstrom von 200 l/h innerhalb von 3 Stunden auf 750°C aufgeheizt, für 3 Stunden auf dieser Temperatur gehalten und in 3 Stunden auf Raumtemperatur abgekühlt. Das kohlenstoffhaltige Produkt wurde in einer Jetmühle (Hosokawa) deagglomeriert.

Die REM-Analyse der Teilchengrößenverteilung ergab folgende Werte: D₅₀ < 2 µm, Differenz zwischen D₉₀- und D₁₀-Wert: < 5 µm.

### Beispiel 7: Kohlenstoffbeschichtung des erfindungsgemäßen Materials (Variante 2)

Die Synthese der erfindungsgemäßen Materialien erfolgte wie in den Beispielen 1 bis 4, nur wurde zur Mischung der Ausgangsmaterialien 20 g Laktose zugegeben. Das Endprodukt enthielt ca. 2,3 Gew.-% Kohlenstoff.

### Beispiel 8: Herstellung von Elektroden

Es wurden Dünnfilmelektroden hergestellt, wie sie beispielsweise in Anderson et al., Electrochem. and Solid State Letters 3 (2) 2000, Seiten 66-68 offenbart sind. Die Elektrodenzusammensetzungen bestanden üblicherweise aus 90 Gewichtsteilen Aktivmaterial, 5 Gewichtsteilen Super P Kohlenstoff und 5 % Polyvinylidenfluorid als Binder bzw. 80 Gewichtsanteilen Aktivmaterial, 15 Gew.-% Super P Kohlenstoff und 5 Gewichtsteile Polyvinylidenfluorid, oder 95 Gewichtsanteilen Aktivmaterial und 5 Gewichtsanteilen Polyvinylidenfluorid.

Die Elektrodensuspensionen wurden mit einer Rakel auf eine Höhe von ca. 150 µm aufgetragen. Die getrockneten Elektroden wurden mehrfach gerollt oder mit geeignetem Druck gepresst bis eine Dicke von 20 bis 25 µm erhalten wurde. Entsprechende Bestimmungen der spezifischen Kapazität und der Strombelastbarkeit wurden sowohl an LiMn_{0,80}Fe_{0,20}PO₄ und LiMn_{0,66}Fe_{0,33}PO₄ des Standes der Technik sowie an erfindungsgemäßen mit Magnesium und Zink substituierten Materialien hergestellt.

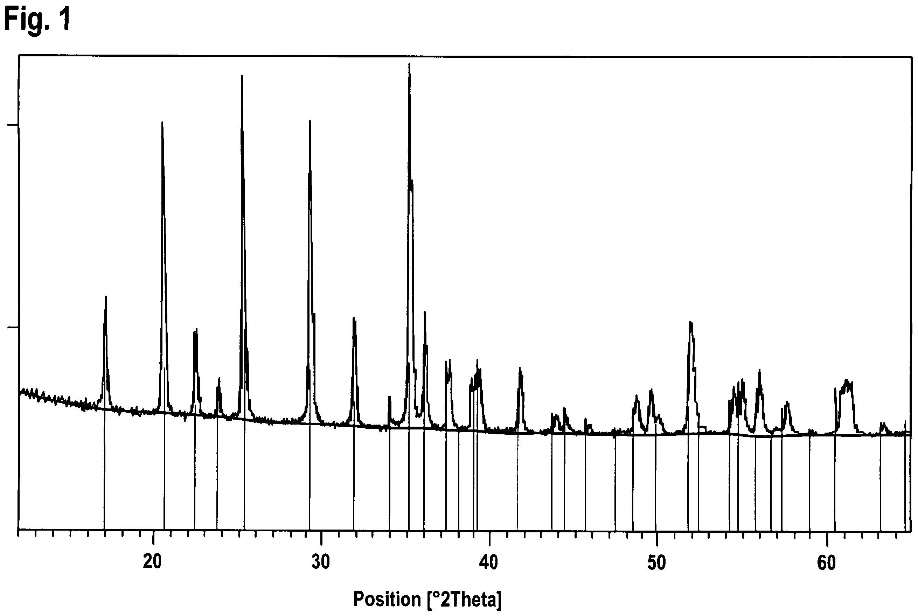

Figur 1 zeigt ein Röntgenpulverdiffraktogramm von LiMn_{0,80}Fe_{0,10}Mg_{0,10}PO₄ nach dem erfindungsgemäßen Verfahren. Die Phasenreinheit des Materials wurde so bestätigt.

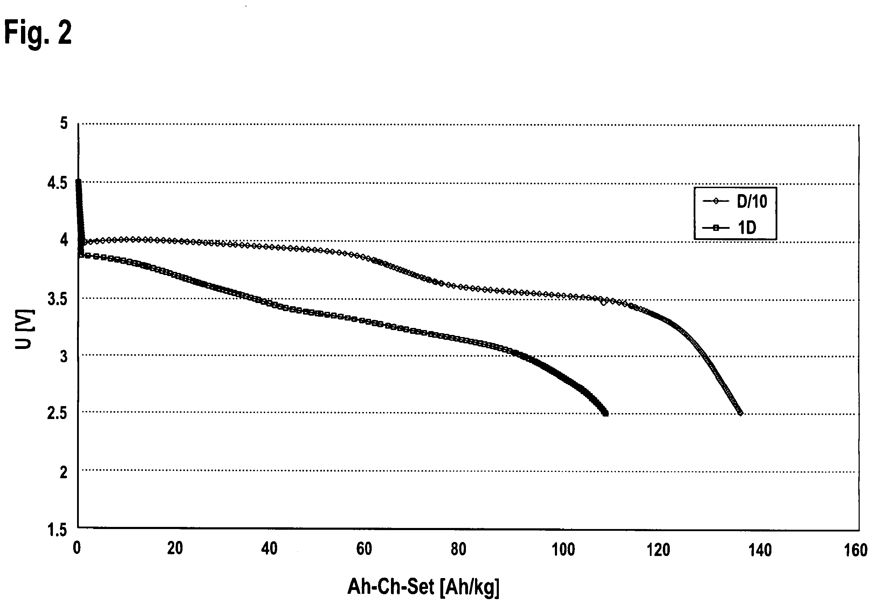

Figur 2 zeigt die Entladungskurven bei C/10 und bei 1C für ein LiMn_{0,80}Fe_{0,20}PO₄ des Standes der Technik. Die Länge des Plateaus betrug ca. 60 mAh/g bei C/10 und eine sehr hohe Polarisation sowohl an den Eisen und Mangan Plateaus wurde bei der 1C Entladerate immer festgestellt.

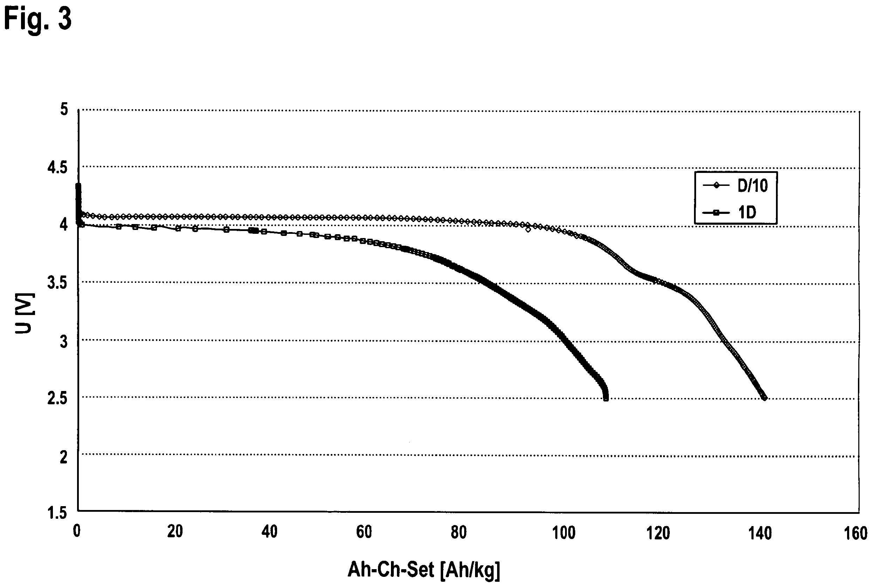

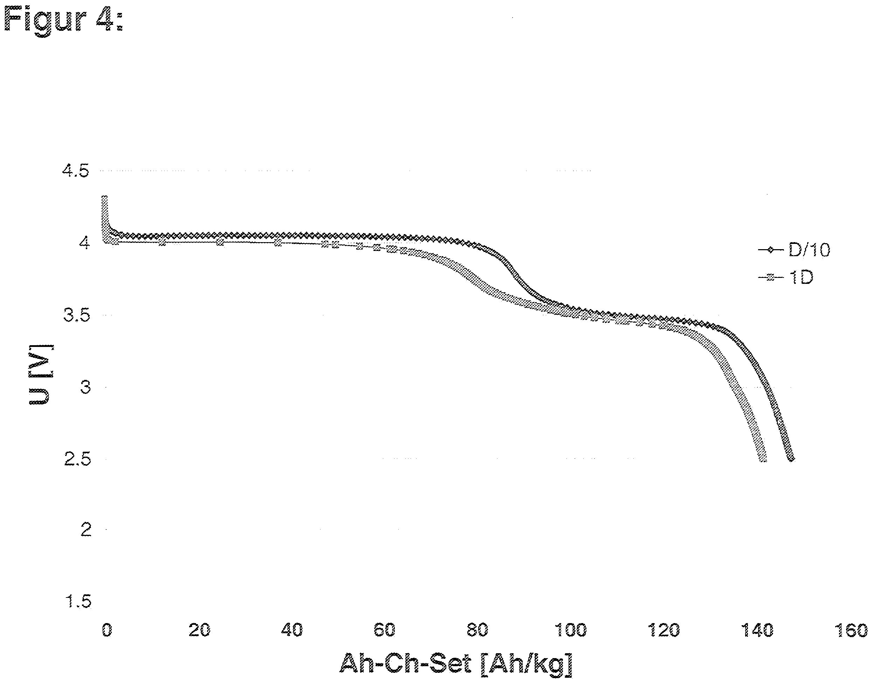

Demgegenüber zeigt überraschenderweise das erfindungsgemäße Magnesium substituierte LiMn_{0,80}Fe_{0,10}Mg_{0,10}PO₄ Material (Fig. 3) eine deutlich größere Länge vom Manganplateau (> 100 mAh/g) obwohl der Mangangehalt im Material gleich wie beim Material des Standes der Technik war. Außerdem war die Polarisation bei der 1C Entladerate im Bereich zwischen 0 und 60 mAh/g gering. Ebenso weist das erfindungsgemäße Magnesium substituierte LiMn_{0,56}Fe_{0,33}Mg_{0,10}PO₄ Material (Fig. 4) eine sehr geringe Polarisation der Batterie sowohl am Manganplateau als auch am Eisenplateau auf.

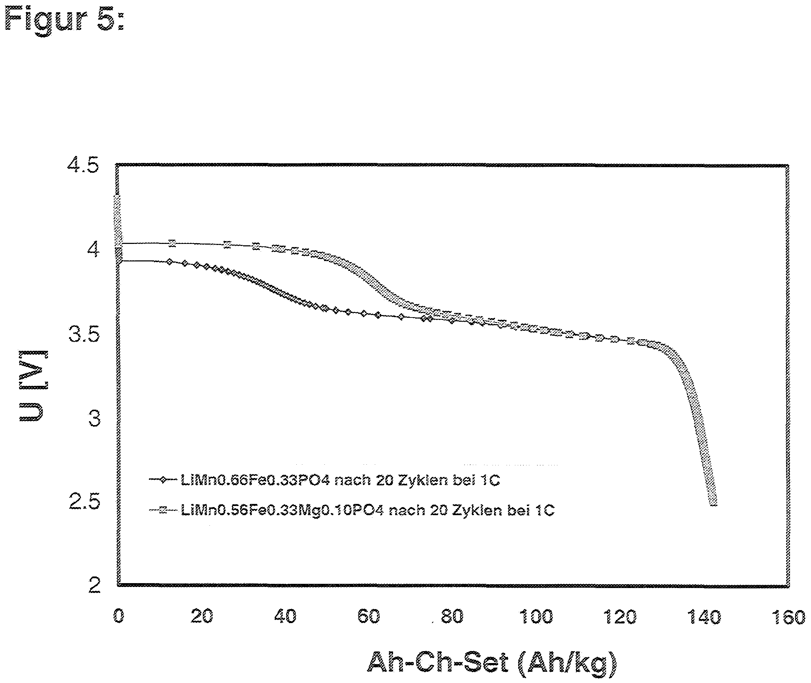

Figur 5 zeigt eine Entladekurve bei 1C nach Alterung (20 Zyklen bei 1C) für ein LiMn_{0,66}Fe_{0,33}PO₄ Material des Standes der Technik mit einer Elektrodendichte von 1,2 g/cm³ und einer Dicke von 20 µm. Im Vergleich dazu ist die Entladekurve bei 1C nach ähnlicher Alterung (20 Zyklen bei 1C) für das erfindungsgemäße Magnesium substituierte LiMn_{0,56}Fe_{0,33}Mg_{0,10}PO₄ Material in Figur 5 gezeigt. Überraschenderweise ist festzustellen, dass die Länge des Manganplateau beim LiMn_{0,56}Fe_{0,33}Mg_{0,10}PO₄ Material grösser als beim LiMn_{0,66}Fe_{0,33}PO₄ Material des Standes der Technik, obwohl der Mangangehalt im erfindungsmässigen Material kleiner war. Da die spezifische Kapazität für beide Materialien ähnlich war, weist das LiMn_{0,56}Fe_{0,33}Mg_{0,10}PO₄ Material nach Alterung in der Batterie eine bessere Energiedichte als das Material des Standes der Technik.

Zusammengefasst stellt die vorliegende Erfindung mit zweiwertigen Metallionen substituierte gemischte Lithium-Mangan-Eisenphosphat-Materialien zur Verfügung, die mittels eines Festkörperverfahrens hergestellt werden können. Die spezifische Entladungskapazität für Raumtemperatur überschreitet 140 mAh/g trotz der Substitution mit teilweise 10 % elektrochemisch inaktiven zweiwertigen Metallionen. Für sämtliche substituierten Materialien wurden sehr gute Entladungsraten gemessen.

Verglichen mit nicht substituierten LiMri_{0,80}Fe_{0,20}PO₄ zeigte sich, dass das Entladungsspannungsprofil bei 1 D für die zweiwertig substituierten neuen erfindungsgemäßen Materialien selbst nach mehreren Ladungs- und Entladungszyklen ein sehr kleinen Leistungsabfall insbesondere beim Manganplateau (4V Bereich) im Gegensatz zu den nicht mit (elektrisch inaktiven) zweiwertigen Materialien substituierten Lithium-Mangan-Eisenphosphaten. Die Länge des Manganplateaus bleibt außerdem unverändert.

In Bezug auf die Energiedichte wurde gefunden, dass die Substitution mit Magnesium oder Zink verglichen mit Kalzium, Kupfer, Titan und Nickel die besten Ergebnisse ergab. Weitere gute Ergebnisse wurden mit Magnesium und Kalzium erhalten.

## Patentansprüche

1. Lithium-Mangan-Metallphosphat der Formel
LiFeₓMn_{1-x-y}M_{y}PO₄
bei dem M ein zweiwertiges Metall aus der Gruppe Zn, Ca und Cd ist und wobei gilt: x < 1, 0,07 < y ≤ 0,20 und x + y < 1; oder bei dem M Mg ist und wobei gilt: 0,01 ≤ x ≤ 0,11, 0,075 < y ≤ 0,15 und x + y < 0,2.

2. Lithium-Mangan-Metallphosphat nach Anspruch 1, bei dem M Zn oder Ca ist.

3. Lithium-Mangan-Metallphosphat nach einem der vorhergehenden Ansprüche, bei dem 0 < x < 0,35 ist, für den Fall, dass M aus der Gruppe Zn, Ca und Cd ist.

4. Lithium-Mangan-Metallphosphat nach einem der vorhergehenden Ansprüche, weiter umfassend Kohlenstoff.

5. Lithium-Mangan-Metallphosphat nach Anspruch 4, wobei der Kohlenstoff im gesamten substituierten Lithium-Mangan-Metallphosphat gleichmäßig verteilt ist.

6. Lithium-Mangan-Metallphosphat nach Anspruch 4 oder 5, wobei der Kohlenstoff die einzelnen Partikel des gemischten Lithium-Mangan-Metallphosphats bedeckt.

7. Lithium-Mangan-Metallphosphat nach einem der Ansprüche 4 bis 6, wobei der Anteil an Kohlenstoff bezogen auf das substituierte Lithium-Mangan-Metallphosphat ≤ 4 Gew.-% beträgt.

8. Kathode für eine Sekundärlithiumionenbatterie enthaltend ein Lithium-Mangan-Metallphosphat nach einem der Ansprüche 1 bis 7.

9. Kathode nach Anspruch 8, enthaltend eine weitere Lithium-Metall-Sauerstoff-Verbindung.

10. Kathode nach Anspruch 9, wobei die weitere Lithium-Metall-Sauerstoff-Verbindung ausgewählt ist aus der Gruppe LiCoO₂ und LiNiO₂, LiFePO₄, LiMnPO₄ und LiMnFePO₄ sowie Mischungen davon.

11. Kathode nach einem der Ansprüche 8 bis 10, die leitmittelzusatzfrei ist.

12. Verfahren zur Herstellung eines Lithium-Mangan-Metallphosphats nach einem der vorhergehenden Ansprüche 1 bis 7, umfassend die folgenden Schritte:
a. des Herstellens einer Mischung enthaltend mindestens eine Li-Ausgangsverbindung, eine Mn-Ausgangsverbindung, eine Fe-Ausgangsverbindung, eine M²⁺ Ausgangsverbindung und eine PO₄³⁻ Ausgangsverbindung
b. des Erhitzens der Mischung bei einer Temperatur von 450-850°C
c. des Isolierens des Lithium-Mangan-Metallphosphats LiFeₓMn_{1-x-y}M_{y}PO₄.

13. Verfahren zur Herstellung eines Lithium-Mangan-Metallphosphats der Formel
LiFeₓMn_{1-x-y}M_{y}PO₄
bei dem M Mg ist und wobei gilt: 0,01 ≤ x ≤ 0,11, 0,07 < y ≤ 0,20 und x + y < 0,2, umfassend die folgenden Schritte:
a. des Herstellens einer Mischung enthaltend mindestens eine Li-Ausgangsverbindung, eine Mn-Ausgangsverbindung, eine Fe-Ausgangsverbindung, eine M²⁺ Ausgangsverbindung und eine PO₄³⁻ Ausgangsverbindung
b. des Erhitzens der Mischung bei einer Temperatur von 450-850°C
c. des Isolierens des Lithium-Mangan-Metallphosphats LiFeₓMn_{1-x-y}M_{y}PO₄.

14. Verfahren nach Anspruch 12 oder 13, wobei in Schritt a) eine weitere, Kohlenstoff enthaltende Komponente zugegeben wird.

15. Verfahren nach Anspruch 12 oder 13, wobei das in Schritt c) erhaltene LiFeₓMn_{1-x-y}M_{y}PO₄ mit einer Kohlenstoff enthaltenden Komponente vermischt wird.

16. Verfahren nach einem der Ansprüche 12 bis 15, wobei als Lithiumquelle LiOH, Li₂O Lithiumoxalat, Lithiumacetat oder Li₂CO₃ verwendet werden.

17. Verfahren nach Anspruch 14, wobei als Fe-Quelle ein Fe²⁺-Salz, ausgewählt aus FeSO₄, FeCl₂, Fe₃(PO₄)₂, FeO, FeHPO₄ oder einem Eisen-Organylsalz oder ein Fe³⁺-Salz, ausgewählt aus FePO₄, Fe₂O₃, FeCl₃ oder ein gemischtes Fe-Salz wie Fe₃O₄ verwendet wird.

18. Verfahren nach Anspruch 15, wobei als Mn-Quelle ein Mn²⁺-Salz, ausgewählt aus MnSO₄, MnCl₂, MnO, MnHPO₄, Manganoxalat, Manganacetat oder ein Mn³⁺-Salz, ausgewählt aus MnPO₄, Mn₂O₃, MnCl₃ oder eine gemischtes Mangansalz wie Mn₃O₄ verwendet wird.

19. Verfahren nach Anspruch 16, wobei als PO₄³⁻-Quelle Phosphorsäure, ein Phosphat, Hydrogenphosphat, Dihydrogenphosphat oder P₂O₅ verwendet wird.

## Claims

1. Lithium manganese metal phosphate of the Formula
LiFeₓMn_{1-x-y}M_{y}PO₄
in which M is a divalent metal from the group Zn, Ca and Cd and wherein: x < 1, 0.07 < y ≤ 0.20 and x + y < 1; or M is Mg and wherein: 0.01 ≤ x ≤ 0.11, 0.075 < y ≤ 0.15 and x + y < 0.2.

2. Lithium manganese metal phosphate according to claim 1, in which M is Zn or Ca.

3. Lithium manganese metal phosphate according to one of the preceding claims, in which 0 < x < 0.35 for the case where M is from the group Zn, Ca and Cd.

4. Lithium manganese metal phosphate according to one of the preceding claims, further comprising carbon.

5. Lithium manganese metal phosphate according to claim 4, wherein the carbon is evenly dispersed in the whole of the substituted lithium manganese metal phosphate.

6. Lithium manganese metal phosphate according to claim 4 or 5, wherein the carbon covers the individual particles of the mixed lithium manganese metal phosphate.

7. Lithium manganese metal phosphate according to one claims 4 to 6, wherein the proportion of carbon, relative to the substituted lithium manganese metal phosphate, is ≤ 4 wt %.

8. Cathode for a secondary lithium ion battery comprising a lithium manganese metal phosphate according to one of claims 1 to 7.

9. Cathode according to claim 8, comprising an additional lithium metal oxygen compound.

10. Cathode according to claim 9, wherein the additional lithium metal oxygen compound is selected from the group LiCoO₂ and LiNiO₂, LiFePO₄, LiMnPO₄ and LiMnFePO₄ as well as mixtures thereof.

11. Cathode according to one of claims 8 to 10 which is free of conductive additives.

12. Process for the production of a lithium manganese metal phosphate according to one of the preceding claims 1 to 7, comprising the following steps:
a. Producing a mixture containing at least one Li starting compound, one Mn starting compound, one Fe starting compound, one M²⁺ starting compound and a PO₄³-starting compound
b. Heating the mixture at a temperature of 450-850 °C
c. Isolating the lithium manganese metal phosphate LiFeₓMn_{1-x-y}M_{y}PO₄.

13. Process for the production of a lithium manganese metal phosphate of the Formula
LiFeₓMn_{1-x-y}M_{y}PO₄
in which M is Mg and wherein: 0.01 ≤ x ≤ 0.11, 0.07 < y ≤ 0.20 and x + y < 0.2, comprising the following steps:
a. Producing a mixture containing at least one Li starting compound, one Mn starting compound, one Fe starting compound, one M²⁺ starting compound and a PO₄³⁻ starting compound
b. Heating the mixture at a temperature of 450-850 °C
c. Isolating the lithium manganese metal phosphate LiFeₓMn_{1-x-y}M_{y}PO₄.

14. Process according to claim 12 or 13, wherein an additional carbon-containing component is added in step a).

15. Process according to claim 12 or 13, wherein the LiFeₓMn_{1-x-y}M_{y}PO₄ obtained in step c) is blended with a carbon-containing component.

16. Process according to one of claims 12 to 15, wherein LiOH, Li₂O lithium oxalate, lithium acetate or Li₂CO₃ are used as the lithium source.

17. Process according to claim 14, wherein an Fe²⁺ salt, selected from FeSO₄, FeCl₂, Fe₃(PO₄)₂, FeO, FeHPO₄ or an iron organyl salt or an Fe³⁺ salt, selected from FePO₄, Fe₂O₃, FeCl₃ or a mixed Fe salt such as Fe₃O₄ is used as the Fe source.

18. Process according to claim 15, wherein an Mn²⁺ salt, selected from MnSO₄, MnCl₂, MnO, MnHPO₄, manganese oxalate, manganese acetate or an Mn³⁺ salt, selected from MnPO₄, Mn₂O₃, MnCl₃ or a mixed manganese salt such as Mn₃O₄ is used as the Mn source.

19. Process according to claim 16, wherein phosphoric acid, a phosphate, hydrogen phosphate, dihydrogen phosphate or P₂O₅ is used as the PO₄³⁻ source.

## Revendications

1. Phosphate de lithium-manganèse-métal répondant à la formule :
LiFeₓMn_{1-x-y}M_{y}PO₄
dans laquelle M représente un métal bivalent choisi parmi le groupe comprenant Zn, Ca et Cd et dans laquelle : x < 1, 0,07 < y ≤ 0,20 et x + y < 1 ; ou dans laquelle M représente Mg et dans laquelle : 0.01 ≤ x ≤ 0,11, 0,075 < y ≤ 0,15 et x + y < 0,2.

2. Phosphate de lithium-manganèse-métal selon la revendication 1, dans lequel M représente Zn ou Ca.

3. Phosphate de lithium-manganèse-métal selon l'une quelconque des revendications précédentes, dans lequel 0 < x < 0,35, pour le cas où M est choisi parmi le groupe comprenant Zn, Ca et Cd.

4. Phosphate de lithium-manganèse-métal selon l'une quelconque des revendications précédentes, comprenant en outre du carbone.

5. Phosphate de lithium-manganèse-métal selon la revendication 4, dans lequel le carbone est réparti d'une manière uniforme dans la totalité du phosphate substitué de lithium-manganèse-métal.

6. Phosphate de lithium-manganèse-métal selon la revendication 4 ou 5, dans lequel le carbone recouvre les particules individuelles du phosphate mixte de lithium-manganèse-métal.

7. Phosphate de lithium-manganèse-métal selon l'une quelconque des revendications 4 à 6, dans lequel la fraction de carbone, rapporté au phosphate substitué de lithium-manganèse-métal, est ≤ 4 % en poids.

8. Cathode pour une batterie secondaire aux ions lithium contenant un phosphate de lithium-manganèse-métal selon l'une quelconque des revendications 1 à 7.

9. Cathode selon la revendication 8, contenant un composé supplémentaire oxygène de lithium-métal.

10. Cathode selon la revendication 9, dans laquelle le composé supplémentaire oxygène de lithium-métal est choisi parmi le groupe comprenant LiCoO₂ et LiNiO₂, LiFePO₄, LiMnPO₄ et LiMnFePO₄, ainsi que leurs mélanges.

11. Cathode selon l'une quelconque des revendications 8 à 10, qui est exempte d'additif faisant office de conducteur.

12. Procédé pour la préparation d'un phosphate de lithium-manganèse-métal selon l'une quelconque des revendications précédentes 1 à 7, comprenant les étapes suivantes dans lesquelles :
a. on prépare un mélange contenant au moins un composé de départ à base de lithium, un composé de départ à base de manganèse, un composé de départ à base de fer, un composé de départ à base de M²⁺, et un composé de départ à base de PO₄³⁻ ;
b. on chauffe le mélange à une température de 450-850 °C ;
c. on isole le phosphate de lithium-manganèse-métal LiFeₓMn_{1-x-y}M_{y}PO₄.

13. Procédé pour la préparation d'un phosphate de lithium-manganèse-métal répondant à la formule :
LiFeₓMn_{1-x-y}M_{y}PO₄
dans laquelle M représente Mg et dans laquelle : 0.01 ≤ x ≤ 0,11, 0,07 < y ≤ 0,20 et x + y < 0,2, comprenant les étapes suivantes dans lesquelles :
a. on prépare un mélange contenant au moins un composé de départ à base de lithium, un composé de départ à base de manganèse, un composé de départ à base de fer, un composé de départ à base de M²⁺, et un composé de départ à base de PO₄³⁻ ;
b. on chauffe le mélange à une température de 450-850 °C ;
c. on isole le phosphate de lithium-manganèse-métal LiFeₓMn_{1-x-y}M_{y}PO₄.

14. Procédé selon la revendication 12 ou 13, dans lequel, à l'étape a), on ajoute un composant supplémentaire contenant du carbone.

15. Procédé selon la revendication 12 ou 13, dans lequel, à l'étape c), on mélange le LiFeₓMn_{1-x-y}M_{y}PO₄ obtenu à l'étape c) avec un composant contenant du carbone.

16. Procédé selon l'une quelconque des revendications 12 à 15, dans lequel on utilise, à titre de source de lithium, du LiOH, du Li₂O de l'oxalate de lithium, de l'acétate de lithium ou du Li₂CO₃.

17. Procédé selon la revendication 14, dans lequel on utilise, à titre de source de fer, un sel de Fe²⁺ choisi parmi FeSO₄, FeCl₂, Fe₃(PO₄)₂, FeO, FeHPO₄ ou un sel de fer contenant un groupe organyle ou un sel de Fe³⁺ choisi parmi FePO₄, Fe₂O₃, FeCl₃ ou un sel de fer mixte tel que Fe₃O₄.

18. Procédé selon la revendication 15, dans lequel on utilise, à titre de source de manganèse, un sel de Mn²⁺, choisi parmi MnSO₄, MnCl₂, MnO, MnHPO₄, l'oxalate de manganèse, l'acétate de manganèse ou un sel de Mn³⁺ choisi parmi MnPO₄, Mn₂O₃, MnCl₃, ou un sel mixte de manganèse tel que Mn₃O₄.

19. Procédé selon la revendication 16, dans lequel on utilise, à titre de source de PO₄³⁻, l'acide phosphorique, un phosphate, de l'hydrogénophosphate, du dihydrogénophosphate ou du P₂O₅.
